# EUROPEAN PATENT SPECIFICATION

(11) **EP 3 492 382 B1**
(45) Date of publication and mention of the grant of the patent: **19.08.2020**
(21) Application number: 18205230.8
(22) Date of filing: 08.11.2018
(51) Int. Cl.: B64D 13/06

(54) **AIR-CONDITIONING SYSTEM FOR AN AIRCRAFT**
KLIMATISIERUNGSSYSTEM FÜR EIN FLUGZEUG
SYSTÈME DE CLIMATISATION POUR AÉRONEF

(30) Priority: 29.11.2017 DE 102017128338
(43) Date of publication of application: 05.06.2019
(73) Proprietor: Airbus Operations GmbH, 21129 Hamburg (DE)
(72) Inventor: Heuer, Thomas, 21129 Hamburg (DE); Scherer, Thomas, 21129 Hamburg (DE); Bäumle, Patrick, 21129 Hamburg (DE)
(74) Representative: LKGLOBAL Lorenz & Kopf PartG mbB Patentanwälte

(56) References cited:
- EP-A1- 2 862 803
- EP-A1- 3 050 801
- WO-A1-2016/189420

## Description

### TECHNICAL FIELD

The invention relates to an air-conditioning system for an aircraft, and to an aircraft having an air-conditioning system of said type.

### BACKGROUND OF THE INVENTION

Aircraft, and in particular passenger aircraft, which fly at great heights, normally have a pressurized fuselage. By way of controlled supply of fresh air and controlled discharge of used air, it is possible to realize inside the cabin a pressure which is above the ambient pressure at the respective flying height. The fresh air may be taken from ram air inlets or the engines in the form of bleed air. The quality of the air in the interior of the cabin consequently also depends on the quality of the air which is taken from an environment of the aircraft and is introduced into the cabin.

In environments of airports or of other facilities in which exhaust gases are produced, air layers which have a tendency to be polluted can form locally. If an aircraft flies through said air layers, polluted air is also introduced into the passenger cabin. This can lead temporarily to undesirable odours in the cabin.

WO 2016/189420 A1 shows an aircraft ventilation system having air quality sensors in order to detect the nature and concentration of possible contaminants in the air flow passages.

### SUMMARY OF THE INVENTION

Consequently, the need can arise to provide measures for improving the air quality in particular in near-ground flight states. Accordingly, the object of the invention is to propose an air-conditioning system for an aircraft, which system is able to avoid conducting into a cabin of the aircraft polluted air which is present outside the aircraft.

This object is achieved by an air-conditioning system having the features of independent Claim 1. Advantageous embodiments and refinements will emerge from the dependent claims and from the following description.

An air-conditioning system for an aircraft is proposed, which system has a fresh air line, a recirculation device, with a cabin air inlet and a recirculation outlet, for recirculating cabin air, an air-mixing device, an air distribution system with multiple cabin air outlets, and a control unit. The air-mixing device is able to be coupled to the recirculation outlet and to the fresh air line, and has a mixed air outlet which is coupled to the air distribution system. The control unit is designed to determine or to receive flight-specific parameters which characterize the flight state of the aircraft, and to determine or to receive environment-specific parameters which characterize an air quality in the environment of the aircraft. The control unit is designed to bring about a first operating state of the air-conditioning system during a first flight state, which is outside cruising flight, in the case of a predefined limit value of at least one environment-specific parameter being exceeded, and to bring about a second operating state of said system during a second flight state, which is outside the first flight state. In the second operating state, the fresh air line is fluidically connected to the air-mixing device, and in the first operating state, the fresh air line is separated from the air-mixing device for preventing the introduction of fresh air into the cabin.

The structural main components of the air-conditioning system may substantially correspond to the main components of a customary air-conditioning system for an aircraft. The basic principle of the air-conditioning system lies in the regulated supply of fresh air and in the provision of a mixture of fresh air and used air in a cabin of the aircraft. If the aircraft is a passenger aircraft, pressurization and pressure regulation also have to be carried out.

The air-mixing device is to be understood as a type of mixing chamber, which has a volume which is dependent inter alia on the cabin size, and has multiple air connections. In the air-mixing device, multiple air streams meet and are mixed. Said air streams may contain in particular treated fresh air and used air taken previously from the cabin. The aim is to generate a homogeneous mixed-air stream therefrom, which can be conducted into the cabin of the aircraft for the purpose of air-conditioning.

The air distribution system is an arrangement of main and branch lines, which extend substantially over the entire cabin of the aircraft and open out in cabin air outlets. The air lines are coupled to one another, and adjusted via corresponding orifice plates and other devices, such that a homogeneous supply of air into the cabin of the aircraft is made possible.

The recirculation device is to be understood as a device which takes used air from a cabin of the aircraft and adds this again, by introduction into the air-mixing device, to the fresh air flowing into the cabin. The fraction of the used air of the total supply air into the cabin may be approximately 50%. Due to the adding of used air, it can be the case that, in spite of desirable flow conditions in the cabin, the required quantity of fresh air and thus the power requirement for treating the fresh air are limited.

In conventional air-conditioning systems in which an outflow of cabin supply air is realized in an upper part of the cabin, recirculation air inlets may be arranged in a lower, laterally outer region of the cabin. For this purpose, in a base region of a side panel, there may be flow cross section which permit the extraction by suction of used cabin air.

In general, the type of the fresh air source is not significant for the embodiment according to the invention of the air-conditioning system. In addition to bleed air-based devices, ram air-based devices are also conceivable. All of these fresh air sources take air from the immediate environment of the aircraft.

As becomes clear from this construction, it is possible for pollutants in the fresh air which is conducted via the fresh air line to the air-conditioning system to be distributed in the entire cabin via the cabin air outlets. However, the provision of the control unit according to the above definition allows the introduction of fresh air into the cabin to be prevented in specific flight states. This is of course to be interpreted only as a short-term, temporary measure, which is intended to be used only in specific situations.

The control unit is designed to determine or to receive flight-specific parameters and environment-specific parameters. Flight-specific parameters are intended to be understood as parameters which permit the control unit to become aware of the present flight state. The flight state may be both a corresponding flight phase or an instantaneous position or a flight attitude of the aircraft. Flight-specific parameters may comprise inter alia the barometric flying height, an ambient pressure, present coordinates in all spatial directions, and a distance to a desired destination. It is also conceivable to detect in particular landing approach phases by landing gear parameters (deployed or retracted). These parameters may originate in particular from a higher-level system of the aircraft, for example from an FMFS (flight management system) in passenger aircraft. A barometric flying height or an ambient pressure could in some cases be determined independently by the control unit in that a corresponding sensor, which is connected to the environment of the aircraft, is coupled to the control unit. The determination or receipt of the flight-specific parameters allows the control unit to become accordingly aware of the present flight state. This state may in particular be subdivided into categories such as for example cruising flight, descent, ascent and the like.

Environment-specific parameters may also be determined or received in order for awareness about the state of the environment of the aircraft to be obtained. Detection of specific indicators for excessive air pollution outside the aircraft and, in dependence on the flight state, bringing-about of an interruption to the fresh air supply should thus be made possible for the control unit.

Furthermore, the control unit is, in all other flight states which do not correspond to the first flight state, designed to bring about a conventional fresh air supply in the second operating state. Consequently, the decision window for the control unit is restricted to a limited portion of a flight of the aircraft. If, during this portion, excessive air pollution is to be expected, it is also the case that an interruption to the fresh air supply is possible only during this short portion. It is pointed out at this juncture that the aeration or ventilation of the cabin is based on the recirculation, so that sufficient mixing of the cabin air is maintained and the comfort of the passengers is not restricted.

In an advantageous embodiment, the flight-specific parameters are selected from a group of parameters, the group comprising barometric height, instantaneous position, flight attitude, speed, air data, system information of other components in the aircraft, and a landing gear status. Other components in the aircraft may for example be a pressure regulation device, main engine or auxiliary power unit.

Alternatively or in addition to this, it is also possible for an inertial measurement device to be provided in the control unit, which device automatically determines a flight attitude profile and, from this, can deduce the respective flight state.

In an advantageous embodiment, the environment-specific parameters are selected from a group of parameters, the group comprising carbon monoxide, sulphur dioxide, nitrogen oxides, ozone and fine dust. Further parameters are conceivable, and the above list should not be considered as being conclusive. The selection of the parameters may be based on national and international pollutant emission registers, in which inter alia air pollutants are recorded. These may also define limit values for specific substances and substance groups, on which in turn the above-mentioned predefined limit value may be based. Merely by way of example, mention is made of the European Pollutant Emission Register (EPER) of the European Community, the Pollutant Release and Transfer Register (PRTR) of Germany and the Toxic Release Inventory (TRI) of the United States. Furthermore, it is conceivable for air pollutants to be detected with the aid of an optical detection device.

In an advantageous embodiment, the air-conditioning system has an air treatment device which is connected to the fresh air line and which has a fresh air outlet, wherein the air treatment device is connected to the fresh air line and is designed to provide fresh air with a predetermined temperature at the fresh air outlet, and wherein the fresh air outlet is able to be connected to the air-mixing device. In the context of the present invention, the core function of the air treatment device is consequently the provision of treated air at the fresh air outlet by way of treatment of air which originates from a fresh air inlet which is connected to the fresh air line.

The air treatment device may have practically any desired construction which allows fresh air to be treated in the desired manner. In addition to pneumatic, bleed air-dependent air-conditioning units, which in particular are based on the use of air cycle machines, other devices are also conceivable. The type and design of the air treatment device may in this case also depend on the type of the aircraft. In addition to the provision of air with a specific temperature, a task of the air treatment device may also include the pressurization of a cabin of the aircraft. Also known are air treatment devices with which the functions of the temperature control of air are independent of the pressurization. However, the specific design of the air treatment device is not significant for the core concept of the invention. According to the invention, it is consequently possible for a connection between the fresh air outlet and the air-mixing device to be interrupted, as soon as the first operating state is assumed.

The control unit may also be designed to interrupt the operation of the air treatment device in the first operating state. As a result, it is possible at least in the temporary phase of the first operating state for the power requirement inside the aircraft to be reduced. As an alternative to the total interruption of the operation, a reduction in the supply of electrical or pneumatic power may also be considered. Since the phase of the first operating state should be present merely briefly, depending on the design of the air treatment device, a total shutdown and the resumption of operation, which occurs relatively soon afterwards, might not be expedient.

The control unit may also be designed to monitor the cabin pressure in the first operating state. This may be realized by coupling to a cabin pressure regulation device, which can supply information about the present cabin pressure. Alternatively or in addition to this, the control unit may also be connected to a separate pressure sensor which is able to detect the cabin pressure. The control unit is preferably designed to detect, in the first operating state, a pressure decrease which exceeds a predefined limit value. The control unit can generate a warning signal and transmit said signal for example to a display unit in a cockpit. On the other hand, the control unit may also be designed to switch the air-conditioning system into the second operating state again in the case of a limit value of said type being exceeded. This function of the control unit may also be contained in a cabin pressure regulation system.

A preferred embodiment furthermore has at least one outlet valve which is coupled to the control unit and which is designed to discharge air from a cabin of the aircraft.

The control unit is furthermore designed to close the at least one outlet valve in the first operating state, and to open said valve in the second operating state for the purpose of regulating a pressure in a cabin of the aircraft, which pressure is dependent on the flying height. The pressure regulation of a pressurized fuselage, for example of a passenger aircraft, is realized by way of mutually coordinated air supply and air removal in the fuselage. In the case of surplus air, which is excessive with respect to any leakage, it is possible for the pressure in the interior of the cabin to be increased. If more air flows from the air outlet than into the fuselage, however, the cabin pressure is reduced. Here too, possible leakage is to be taken into consideration. If the at least one outlet valve is consequently closed in the first operating state, the air-conditioning system is operated in a pure air recirculation mode in the absence of a fresh air supply. Air can escape from the fuselage, or flow in, exclusively by way of leakage.

During landing approach phases, the pressure inside the cabin of an aircraft air-conditioned by the air-conditioning system according to the invention can consequently increase only very slowly and only owing to possible leakage. The rate of the pressure increase which is thus able to be reached can be significantly below that rate which is expected in the case of conventional pressure regulation. However, the assumption of the second operating state prior to the landing allows this to be compensated again. In an ascent phase, the pressure in the cabin decreases slowly and only owing to leakage, wherein the rate of the pressure decrease can likewise be significantly below that rate which is expected in the case of conventional pressure regulation. By switching to the second operating state, however, this is likewise compensated again.

Preferably, the control unit is designed to actuate the at least one outlet valve prior to the assumption of the first operating state such that, immediately prior to the first operating state, the pressure in the cabin substantially corresponds to an end pressure of the cabin after passing-through of the second operating state instead of the first operating state. The change in pressure for reaching said end pressure may be realized smoothly prior to the assumption of the first operating state, and after the first operating state has been passed through, it is the case that merely a relatively small change in pressure for compensating for possible leakage effects is necessary. This concerns in particular the first operating state with falling cabin height, that is to say in a landing approach phase.

Preferably, the first flight state may comprise a landing approach phase, which is between a cruising flight and a landing, or an ascent phase, which is between the take-off and the attainment of a cruising height. In these flight phases, the aircraft may come into contact with near-ground air pollution in particular in a region in the vicinity of an airport. By analysis of the environment-specific parameters in these flight states, it is possible to avoid having the most substantial introduction of air pollutants into the cabin.

The control unit may also be designed to control the cabin pressure regulation. In particular, this may be in the first operating state. The control unit may in this case be a component of the cabin pressure regulation device or be connected thereto. The cabin pressure regulation device may in this case also be a component of the air-conditioning system. The air-conditioning system is consequently able to perform adaptive cabin pressure regulation in the first operating state. This means that, in the first operating state, active intervention in the pressure regulation is interrupted. Furthermore, in the case of the adaptive cabin pressure regulation, the cabin pressure regulation is adapted such that, with a cabin height which increases overall, the cabin pressure is, in a second operating state, regulated on the basis of an end pressure of a first operating state which has been passed through. In this way, abrupt changes in pressure after passing-through of the first operating state can be avoided. With a cabin height which decreases overall, the cabin pressure regulation may be realized such that, immediately prior to the first operating state, the pressure in the cabin is adapted to a value which substantially corresponds to an end pressure of the cabin after passing-through of the second operating state instead of the first operating state.

As may be observed inter alia on the basis of atmospheric dispersion models, the concentration of air pollutants decreases with increasing height above sea level. In a particularly preferred embodiment, the first flight state may comprise at most a lower third of the landing approach phase or the ascent phase. In this way, the time frame for possible switching into the first operating state is limited to an even greater extent. Consequently, an air recirculation mode is able to be realized in a manner barely noticeable for the passengers.

Additionally, it is also possible for the air-conditioning system according to the invention to have a warning device and a deactivation means which is coupled to the control unit, wherein the warning device is designed to indicate the assumption of the first operating state in a cockpit of the aircraft, and wherein the deactivation means is designed to send a control signal to the control unit, so that the control unit cancels the first operating state. The present air recirculation mode can be indicated to a pilot. The deactivation means makes it possible for this air recirculation mode to be deactivated manually.

As stated above, the air-conditioning system may also have an optical detection device for detecting environment-specific parameters, wherein the optical detection device is coupled to the control unit. This may be a camera, an infra-red camera, a LIDAR, or other detection devices which are able to perform optical detection of in particular particulate constituents in the air.

The invention also relates to an aircraft having a fuselage with a cabin formed therein and with at least one air-conditioning system according to the above description.

It is possible for the control unit to be able to be connected to a processing unit on board the aircraft, said processing unit providing the environment-specific and/or flight-specific parameters. For example, this is a flight management system (FMS).

The processing unit may furthermore be designed to receive at least one data set concerning environment-specific parameters from a device situated outside the aircraft and to provide said data set in a database in the aircraft in a manner retrievable by the control unit. The data set may contain vertically resolved data on environment-specific parameters at least for an intended take-off or landing location.

The aircraft may also be a passenger aircraft.

### BRIEF DESCRIPTION OF THE FIGURES

Further features, advantages and possible uses of the present invention will emerge from the following description of the exemplary embodiments and from the figures. Here, all of the features described and/or illustrated in the figures form the subject matter of the invention individually and in any desired combination, even independently of the combination of said features in the individual claims or the back-references thereof. Furthermore, in the figures, the same reference signs are used for identical or similar objects.
Figure 1 schematically shows a block diagram of an air-conditioning system.
Figure 2 shows a height diagram with an air recirculation mode represented qualitatively therein.
Figure 3 shows an aircraft having an air-conditioning system of said type.

### DETAILED ILLUSTRATION OF EXEMPLARY EMBODIMENTS

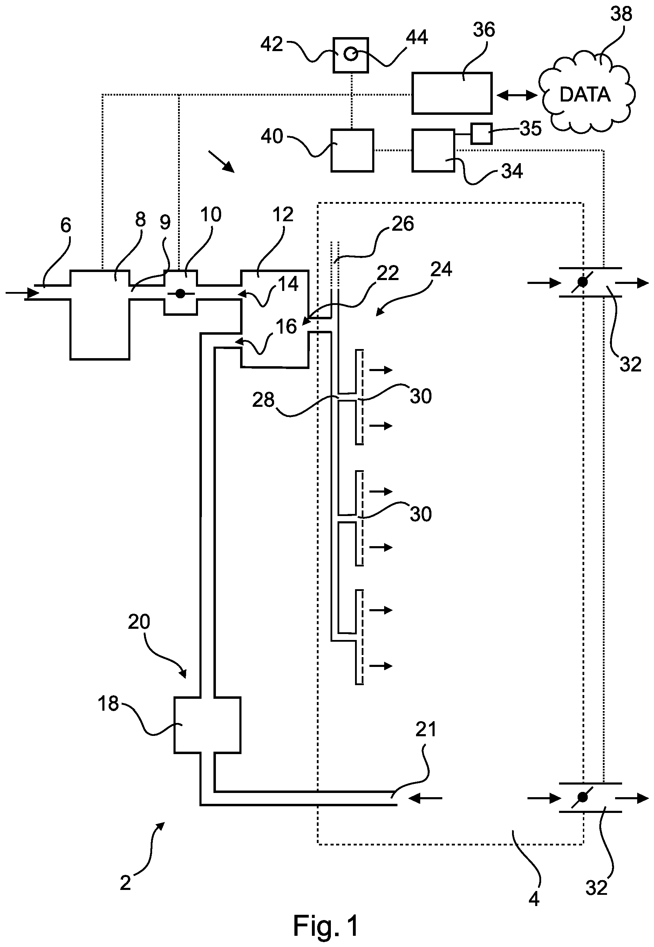

Figure 1 shows a schematic embodiment of an air-conditioning system 2 in a block-based illustration. By way of example, a passenger cabin 4, represented by dashed lines, is, by way of the air-conditioning system 2, supplied with treated air and subjected to a desired pressure.

The air-conditioning system 2 has a fresh air line 6 by way of which fresh air is provided. The source for fresh air cannot be seen in the illustration and may be provided by bleed air, ram air or other air sources. An air treatment device 8 receives fresh air and is able to treat this in the desired manner. This concerns in particular the provision of a desired temperature and a desired pressure at a fresh air outlet 9. For example, the air treatment device 8 may be designed as a bleed air-operated air cycle machine and/or with in particular electrically operated compressors and an evaporative cooling installation and/or other conceivable cooling devices. It is self-evident that hybrid variants of all of these embodiments are also conceivable.

A fresh air valve 10 is, by way of example, shown arranged downstream of the air treatment device 8 and is completely open in this illustration. Consequently, it is possible for fresh air from the fresh air line 6 to be conducted in treated form through the fresh air valve 10. Said fresh air then reaches a mixing device 12, which has a fresh air inlet 14 for this purpose.

The mixing device 12 also has a recirculation air inlet 16, which is connected to a recirculation device 18. The latter device is set up for receiving used air from the cabin 4 via a schematically indicated cabin air inlet 21. It should be noted at this juncture that, normally, there is provided no discrete cabin air inlet 21 but rather a series of a large number of outlet openings through which air from the cabin flows into one or more spaces situated below the cabin and, from there, is extracted by suction. The cabin air inlet 21 may thus be an inlet opening of the recirculation device 18. The recirculation device 18 conducts the used air into the mixing device 12 via a recirculation air outlet 20.

The mixing device 12 is designed to provide, from the incoming air streams, mixed air at a mixed air outlet 22, which mixed air is fed to an air distribution system 24. The air distribution system 24 may have main lines 26 and 28 which are connected to multiple cabin air outlets 30. Mixed air which flows into the air distribution system 24 is consequently fed to the cabin air outlets 30, which in turn discharge the air into the cabin 4.

In order for a part of used cabin air to be removed, use is made of outlet valves 32, which may be arranged in a lower region of an aircraft fuselage. By regulation of the degree of opening of the outlet valves 32, the pressure in the interior of the cabin 4 is influenced directly when air continuously flows into the cabin 4 through the cabin air outlets 30. In order to regulate the cabin pressure, a cabin pressure regulation device 34 may be provided, which is connected in particular to the outlet valves 32 and the other components of the air-conditioning system 2. The cabin pressure regulation device 34 has, as is normally the case with passenger aircraft, one or more dedicated sensors 35, which are able to detect the pressure of the cabin independently of other devices.

As stated in the introduction, it is conceivable that, in the case of flight through air layers having pollutants, the latter are introduced into the cabin 4. Such a situation may occur in particular in near-ground regions, which occur during a direct landing approach or after take-off and the initial climbing flight. Data concerning air pollution which is possibly present may be stored in a processing unit 36. By way of example, this could be a flight management system (FMS) or a separate computer unit provided for this purpose, or could be realized merely as a function in another device on board the aircraft. The processing unit 36 may be supplied externally with data 38, which contain information about air quality in the form of environment-specific parameters.

A control unit 40 is provided to determine or to receive flight-specific parameters which characterize the flight state of the aircraft. For example, the control unit 40 could receive information about the present flight state by way of a connection to the processing unit 36, which could be designed as an FMS. A flight state may comprise information about flight attitude angle, speed, acceleration, flying height, location on a planned flight path, or the like. Consequently, the control unit 40 can establish whether the aircraft is in a near-ground region, in which any pollutants in the air could occur.

An exact definition of a near-ground region should include a certain amount of leeway, which could be adapted to the altitude of a starting airport, a landing airport, a geographical location or the like. The near-ground region may furthermore also be the same for all flight destinations. It could be expedient to define the near-ground region up to one third or half of a (first) cruising height.

It is provided that the control unit 40 can furthermore determine or receive data which characterize the air quality in an environment of the aircraft. The computer device 36 may provide said data. For example, the control unit 40 could permanently receive said data during the flight. It is also conceivable that the control unit 40 requests said data, and then evaluates them, only when the first flight state is present.

The control unit 40 is designed to determine from environment-specific parameters whether a tolerable amount of air pollution is being exceeded. This may be carried out on the basis of different measurement values, which are stated above. If the control unit 40 can actually detect an exceedance of a predefined limit value of at least one environment-specific parameter, the control unit 40 can bring about a first operating state of the air-conditioning system 2. This relates in particular to the closure of the fresh air valve 10 and, optionally, the deactivation of the air treatment device 8. In order to prevent a pressure decrease, it is also possible for the outlet valves 32 to be closed. In the first operating state, the cabin 4 consequently has no fresh air supply, but rather is operated in a pure air recirculation mode. If there is a departure from an air layer having a non-tolerated amount of air pollution, the control unit 40 can bring about the assumption of the first operating state. This is shown in figure 1 in that the fresh air valve 10 and the outlet valves 32 are open and also the air treatment device 8 is being operated.
The control unit 40 may also be connected to a warning device 42, which is positioned for example in a cockpit of the aircraft (not shown). The warning device may have a deactivation means 44, by way of which it is possible to manually depart from the first operating state again.

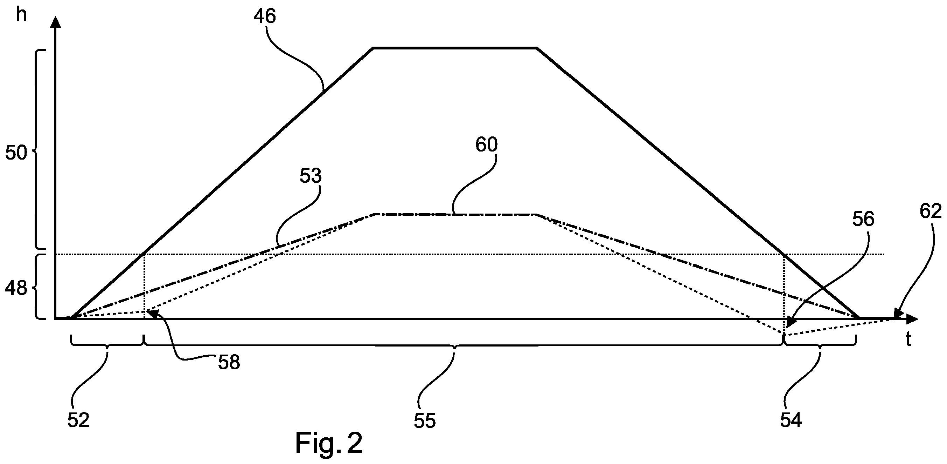

Figure 2 shows, on the basis of a height diagram, which consequences the operation of the control unit 40 has on the cabin pressure or the cabin pressure regulation. Here, the cabin pressure is represented by a so-called cabin height, that is to say the height at which a barometric pressure which is identical to the cabin pressure prevails.

The instantaneous flying height of the aircraft is represented by the (solid) height curve 46. Following a climbing phase, which is shown in a simplified manner, the aircraft flies at a constant cruising height and then performs a descent and landing approach. By way of example, a near-ground region 48 which could contain pollution is marked. If the aircraft is situated in this region 48, the first flight state is to be adopted. A region 50 situated thereabove is regarded as being sufficiently clean. If the aircraft is situated therein, the second flight state is adopted.

If, in the first flight state, an excessive amount of air pollution in the direct environment of the aircraft is detected, the control unit 40 brings about the assumption of a first operating state 52, which is identified by a dashed line along the X-axis (progression of time). Assumed in this first operating state 52 are the fresh air supply, by way of closure of the fresh air valve 10, and the optional deactivation of the air treatment device 8 and also the closure of the outlet valves 32. The cabin 4 is then air-conditioned exclusively in an air recirculation mode. The detection of the excessive amount of air pollution may be realized by evaluation of the environment-specific data. In this case, specific parameters are compared with predefined limit values. In the case of a limit value being exceeded, a non-tolerated amount of air pollution can be assumed.

Subsequently, that is to say in the upper height region 50, in which the second flight state is adopted, the fresh air supply is resumed by opening the fresh air valve 10 and the start-up of the air treatment device 8 is resumed. Additionally, the outlet valves 32 are re-opened. The cabin height then increases by a greater degree to a maximum cabin height 60.

Through the comparison with a dash-dotted line, which represents conventional operation exclusively in a second operating state 53 with no switching into the air recirculation mode, it becomes clear that, in the first operating state 52, the cabin height increases to an end pressure 58 only relatively slowly. This occurs here, by way of example, exclusively as a result of possible leakage in the fuselage, which leads to a leakage air stream and thus to a slow pressure decrease. Following the switching of the air-conditioning system 2 into a second operating state 55, the cabin height then increases to a maximum cabin height 60. Following initiation of the descent, the near-ground region 48 is again reached at a certain point in time, in which region the first flight state is present and in which region, in the case shown, an excessive amount of pollutants in the air surrounding the aircraft is again assumed. The closure of the outlet valves 32 and the deactivation of the fresh air supply, by way of closure of the fresh air valve 10, and the activation of the air treatment device 8 are again realized.

A special feature can furthermore be seen in figure 2 in that, at this beginning of a renewed first operating state 54 at the end of a flight mission, that is to say in a descent phase or landing approach phase during entry into the relevant near-ground region 48, if there is air pollution there, a negative cabin height 56 is present by way of example. The control unit 40 is able to regulate with advance checking the cabin pressure in the cabin 4 already significantly ahead of this further first operating state 54 owing to the data regarding presence of pollution in the air. Following the end of the first operating state 54, owing to possible leakage, an end pressure prevails, or an end cabin height 62 corresponding to the latter is present, which would correspond to the end pressure which is to be expected when a second operating state 55 is exclusively used.

The dash-dotted line shows the profile of the cabin height in a conventional mode, that is to say without switching into the air recirculation mode.

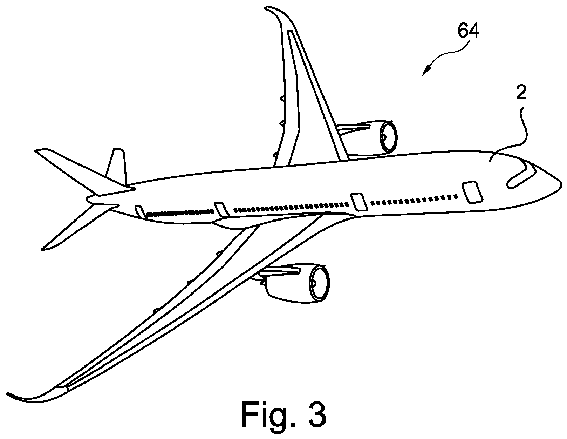

Finally, figure 3 shows an aircraft 64 which has an air-conditioning system 2 mentioned above.

It is additionally pointed out that "having" or "comprising" does not rule out other elements or steps, and "a" or "an" do not rule out a multiplicity. It is also pointed out that features that have been described with reference to one of the above exemplary embodiments may also be used in combination with other features of other exemplary embodiments described above. Reference signs in the claims are not to be regarded as limiting.

## Claims

1. Air-conditioning system (2) for an aircraft, having
- a fresh air line (6),
- a recirculation device (18), with a cabin air inlet (21) and a recirculation air outlet (20), for recirculating cabin air,
- an air-mixing device (12),
- an air distribution system (24) with multiple cabin air outlets (30), and
- a control unit (40),
wherein the air-mixing device (12) is able to be coupled to the recirculation outlet (20) and to the fresh air line (6), and has a mixed air outlet (22) which is coupled to the air distribution system (24),
wherein the control unit (40) is designed to determine or to receive flight-specific parameters which characterize the flight state of the aircraft (64), and to determine or to receive environment-specific parameters which characterize an air quality in the environment of the aircraft (64),
wherein the control unit (40) is designed to bring about a first operating state (52, 54) of the air-conditioning system (2) during a first flight state, which is outside cruising flight, in the case of a predefined limit value of at least one environment-specific parameter being exceeded, and to bring about a second operating state (53, 55) of said system during a second flight state, which is outside the first flight state, and
wherein, in the second operating state (53, 55), the fresh air line (6) is fluidically connected to the air-mixing device (12), and wherein, in the first operating state (52, 54), the fresh air line (6) is separated from the air-mixing device (12) for preventing the introduction of fresh air into the cabin.

2. Air-conditioning system (2) according to Claim 1,
wherein the flight-specific parameters are selected from a group of parameters, the group comprising:
- barometric height,
- instantaneous position,
- flight attitude,
- speed,
- landing gear status,
- air data, and
- system information of other components.

3. Air-conditioning system (2) according to Claim 1 or 2,
wherein the environment-specific parameters are selected from a group of parameters, the group comprising:
- carbon monoxide,
- sulphur dioxide,
- nitrogen oxides,
- ozone, and
- fine dust.

4. Air-conditioning system (2) according to one of the preceding claims,
furthermore having an air treatment device (8) which is connected to the fresh air line (6) and which has a fresh air outlet (9),
wherein the air treatment device (8) is connected to the fresh air line (6) and is designed to provide fresh air with a predetermined temperature at the fresh air outlet (9),
wherein the fresh air outlet (9) is able to be connected to the air-mixing device (12).

5. Air-conditioning system (2) according to Claim 4,
wherein the control unit (40) is designed to interrupt the operation of the air treatment device (8) in the first operating state (52, 54).

6. Air-conditioning system (2) according to one of the preceding claims,
also having at least one outlet valve (32) which is coupled to the control unit (40) and which is designed to discharge air from a cabin (4) of the aircraft (64),
wherein the control unit (40) is designed to close the at least one outlet valve (32) in the first operating state (52, 54), and to open said valve in the second operating state (53, 55) for the purpose of regulating a pressure in a cabin (4) of the aircraft (64), which pressure is dependent on the flying height.

7. Air-conditioning system (2) according to Claim 6,
wherein the control unit (40) is designed to actuate the at least one outlet valve (32) prior to the assumption of the first operating state (52, 54) such that, immediately prior to the first operating state (52, 54), the pressure in the cabin (4) substantially corresponds to an end pressure of the cabin (4) after passing-through of the second operating state (53, 55) instead of the first operating state (52, 54).

8. Air-conditioning system (2) according to one of the preceding claims,
wherein the first flight state comprises a landing approach phase, which is between a cruising flight and a landing, or an ascent phase, which is between the take-off and the attainment of a cruising height.

9. Air-conditioning system (2) according to Claim 8,
wherein the first flight state comprises at most a lower third of the landing approach phase or the ascent phase.

10. Air-conditioning system (2) according to one of the preceding claims,
also having a warning device (42) and a deactivation means (44) which is coupled to the control unit (40),
wherein the warning device (42) is designed to indicate the assumption of the first operating state (52, 54) in a cockpit of the aircraft (64), and
wherein the deactivation means (44) is designed to send a control signal to the control unit (40), so that the control unit (40) cancels the first operating state (52, 54).

11. Air-conditioning system according to one of the preceding claims,
also having an optical detection device for detecting environment-specific parameters, wherein the optical detection device is coupled to the control unit (40).

12. Aircraft (64) having a fuselage with a cabin (4) formed therein and with at least one air-conditioning system (2) according to one of Claims 1 to 11.

13. Aircraft (64) according to Claim 12,
wherein the control unit (40) is able to be connected to a processing unit (36) on board the aircraft (64), said processing unit providing the environment-specific and/or flight-specific parameters.

14. Aircraft (64) according to Claim 13,
wherein the processing unit (36) is designed to receive at least one data set concerning environment-specific parameters from a device situated outside the aircraft (64) and to provide said data set in a database in the aircraft (64) in a manner retrievable by the control unit (40), and
wherein the data set contains vertically resolved data on environment-specific parameters at least for an intended take-off or landing location.

15. Aircraft (64) according to one of Claims 12 to 14,
wherein the aircraft (64) is a passenger aircraft.

## Patentansprüche

1. Klimatisierungssystem (2) für ein Flugzeug, das Folgendes aufweist:
- eine Frischluftleitung (6),
- eine Umwälzvorrichtung (18) mit einem Kabinenlufteinlass (21) und einem Umwälzluftauslass (20) zum Umwälzen von Kabinenluft,
- eine Luftmischvorrichtung (12),
- ein Luftverteilungssystem (24) mit mehreren Kabinenluftauslässen (30), und
- eine Steuereinheit (40),
wobei die Luftmischvorrichtung (12) mit dem Umwälzauslass (20) und mit der Frischluftleitung (6) verbunden werden kann und einen Mischluftauslass (22) aufweist, der mit dem Luftverteilungssystem (24) gekoppelt ist,
wobei die Steuereinheit (40) ausgelegt ist, flugspezifische Parameter zu bestimmen oder zu empfangen, die den Flugzustand des Flugzeugs (64) charakterisieren, und umweltspezifische Parameter zu bestimmen oder zu empfangen, die eine Luftqualität in der Umgebung des Flugzeugs (64) charakterisieren,
wobei die Steuereinheit (40) ausgelegt ist, während eines ersten Flugzustands, der außerhalb eines Reiseflugs liegt, einen ersten Betriebszustand (52, 54) des Klimatisierungssystems (2) herbeizuführen, wenn ein vorgegebener Grenzwert mindestens eines umweltspezifischen Parameters überschritten wird, und während eines zweiten Flugzustands, der außerhalb des ersten Flugzustands liegt, einen zweiten Betriebszustand (53, 55) des Systems herbeizuführen, und
wobei im zweiten Betriebszustand (53, 55) die Frischluftleitung (6) mit der Luftmischvorrichtung (12) fluidtechnisch verbunden ist und wobei im ersten Betriebszustand (52, 54) die Frischluftleitung (6) zum Verhindern des Einbringens von Frischluft in die Kabine von der Luftmischvorrichtung (12) getrennt ist.

2. Klimatisierungssystem (2) nach Anspruch 1,
wobei die flugspezifischen Parameter aus einer Gruppe von Parametern ausgewählt sind, wobei die Gruppe Folgendes umfasst:
- barometrische Höhe,
- momentane Position,
- Flughöhe,
- Geschwindigkeit,
- Fahrwerkszustand,
- Luftdaten, und
- Systeminformationen über andere Komponenten.

3. Klimatisierungssystem (2) nach Anspruch 1 oder 2,
wobei die umweltspezifischen Parameter aus einer Gruppe von Parametern ausgewählt sind, wobei die Gruppe Folgendes umfasst:
- Kohlenmonoxid,
- Schwefeldioxid,
- Stickstoffoxide,
- Ozon, und
- Feinstaub.

4. Klimatisierungssystem (2) nach einem der vorhergehenden Ansprüche,
das ferner eine Luftbehandlungsvorrichtung (8) aufweist, die mit der Frischluftleitung (6) verbunden ist und einen Frischluftauslass (9) aufweist,
wobei die Luftbehandlungsvorrichtung (8) mit der Frischluftleitung (6) verbunden ist und ausgelegt ist, am Frischluftauslass (9) Frischluft mit einer vorgegebenen Temperatur bereitzustellen,
wobei der Frischluftauslass (9) mit der Luftmischvorrichtung (12) verbunden werden kann.

5. Klimatisierungssystem (2) nach Anspruch 4,
wobei die Steuereinheit (40) ausgelegt ist, den Betrieb der Luftbehandlungsvorrichtung (8) im ersten Betriebszustand (52, 54) zu unterbrechen.

6. Klimatisierungssystem (2) nach einem der vorhergehenden Ansprüche,
das außerdem mindestens ein Auslassventil (32) aufweist, das mit der Steuereinheit (40) gekoppelt ist und das ausgelegt ist, Luft aus einer Kabine (4) des Flugzeugs (64) auszulassen,
wobei die Steuereinheit (40) ausgelegt ist, zum Zweck des Regulierens eines Drucks in einer Kabine (4) des Flugzeugs (64) das mindestens eine Auslassventil (32) im ersten Betriebszustand (52, 54) zu schließen und das Ventil im zweiten Betriebszustand (53, 55) zu öffnen, wobei der Druck von der Flughöhe abhängt.

7. Klimatisierungssystem (2) nach Anspruch 6,
wobei die Steuereinheit (40) ausgelegt ist, das mindestens eine Auslassventil (32) vor der Annahme des ersten Betriebszustands (52, 54) zu betätigen, derart, dass unmittelbar vor dem ersten Betriebszustand (52, 54) der Druck in der Kabine (4) im Wesentlichen einem Enddruck der Kabine (4) nach dem Durchlaufen des zweiten Betriebszustands (53, 55) anstelle des ersten Betriebszustands (52, 54) entspricht.

8. Klimatisierungssystem (2) nach einem der vorhergehenden Ansprüche,
wobei der erste Flugzustand eine Landeanflugphase, die zwischen einem Reiseflug und einer Landung liegt, oder eine Steigflugphase, die zwischen dem Start und dem Erreichen einer Reiseflughöhe liegt, umfasst.

9. Klimatisierungssystem (2) nach Anspruch 8,
wobei der erste Flugzustand hauptsächlich ein unteres Drittel der Landeanflugphase oder der Steigflugphase umfasst.

10. Klimatisierungssystem (2) nach einem der vorhergehenden Ansprüche,
das außerdem eine Warnvorrichtung (42) und ein Deaktivierungsmittel (44), das mit der Steuereinheit (40) gekoppelt ist, aufweist,
wobei die Warnvorrichtung (42) ausgelegt ist, die Annahme des ersten Betriebszustands (52, 54) in einem Cockpit des Flugzeugs (64) anzugeben, und
wobei das Deaktivierungsmittel (44) ausgelegt ist, ein Steuersignal an die Steuereinheit (40) zu senden, derart, dass die Steuereinheit (40) den ersten Betriebszustand (52, 54) aufhebt.

11. Klimatisierungssystem nach einem der vorhergehenden Ansprüche,
das außerdem eine optische Detektionsvorrichtung zum Detektieren von umweltspezifischen Parametern aufweist, wobei die optische Detektionsvorrichtung mit der Steuereinheit (40) gekoppelt ist.

12. Flugzeug (64), das einen Rumpf mit einer darin ausgebildeten Kabine (4) und mit mindestens einem Klimatisierungssystem (2) nach einem der Ansprüche 1 bis 11 aufweist.

13. Flugzeug (64) nach Anspruch 12,
wobei die Steuereinheit (40) mit einer Verarbeitungseinheit (36) an Bord des Flugzeugs (64) verbunden sein kann, wobei die Verarbeitungseinheit die umweltspezifischen und/oder flugspezifischen Parameter bereitstellt.

14. Flugzeug (64) nach Anspruch 13,
wobei die Verarbeitungseinheit (36) ausgelegt ist, mindestens einen Datensatz bezüglich umweltspezifischer Parameter von einer Vorrichtung zu empfangen, die außerhalb des Flugzeugs (64) angeordnet ist, und den Datensatz in einer Datenbank im Flugzeug (64) auf eine Weise bereitzustellen, die durch die Steuereinheit (40) abrufbar ist, und
wobei der Datensatz vertikal aufgelöste Daten über umweltspezifische Parameter mindestens für einen beabsichtigten Start- oder Landungsort enthält.

15. Flugzeug (64) nach einem der Ansprüche 12 bis 14,
wobei das Flugzeug (64) ein Passagierflugzeug ist.

## Revendications

1. Système de conditionnement d'air (2) pour un aéronef, comportant
- une conduite d'air frais (6),
- un dispositif de recirculation (18), doté d'une entrée d'air cabine (21) et d'une sortie d'air de recirculation (20), destiné à faire recirculer de l'air cabine,
- un dispositif mélangeur d'air (12),
- un système de distribution d'air (24) doté de multiples sorties d'air cabine (30), et
- une unité de commande (40),
le dispositif mélangeur d'air (12) étant susceptible d'être relié à la sortie de recirculation (20) et à la conduite d'air frais (6), et comportant une sortie d'air mélangé (22) qui est reliée au système de distribution d'air (24),
l'unité de commande (40) étant conçue pour déterminer ou pour recevoir des paramètres propres au vol qui caractérisent l'état de vol de l'aéronef (64), et pour déterminer ou pour recevoir des paramètres propres au milieu ambiant qui caractérisent une qualité d'air dans le milieu ambiant de l'aéronef (64),
l'unité de commande (40) étant conçue pour susciter un premier état de fonctionnement (52, 54) du système de conditionnement d'air (2) au cours d'un premier état de vol, en dehors d'un vol de croisière, en cas de dépassement d'une valeur limite prédéfinie d'au moins un paramètre propre au milieu ambiant, et pour susciter un deuxième état de fonctionnement (53, 55) dudit système au cours d'un deuxième état de vol, en dehors du premier état de vol, et
dans le deuxième état de fonctionnement (53, 55), la conduite d'air frais (6) étant raccordée fluidiquement au dispositif mélangeur d'air (12) et, dans le premier état de fonctionnement (52, 54), la conduite d'air frais (6) étant séparée du dispositif mélangeur d'air (12) pour empêcher l'introduction d'air frais dans la cabine.

2. Système de conditionnement d'air (2) selon la revendication 1,
dans lequel les paramètres propres au vol sont sélectionnés dans un groupe de paramètres, le groupe comprenant :
- une hauteur barométrique,
- une position instantanée,
- une attitude de vol,
- une vitesse,
- une configuration du train d'atterrissage,
- des données air, et
- des informations système d'autres composants.

3. Système de conditionnement d'air (2) selon la revendication 1 ou 2,
dans lequel les paramètres propres au milieu ambiant sont sélectionnés dans un groupe de paramètres, le groupe comprenant :
- le monoxyde de carbone,
- le dioxyde de soufre,
- les oxydes d'azote,
- l'ozone, et
- les poussières fines.

4. Système de conditionnement d'air (2) selon l'une des revendications précédentes,
comportant en outre un dispositif de traitement d'air (8) qui est raccordé à la conduite d'air frais (6) et qui comporte une sortie d'air frais (9),
le dispositif de traitement d'air (8) étant raccordé à la conduite d'air frais (6) et étant conçu pour fournir de l'air frais d'une température prédéterminée à la sortie d'air frais (9),
la sortie d'air frais (9) étant susceptible d'être raccordée au dispositif mélangeur d'air (12).

5. Système de conditionnement d'air (2) selon la revendication 4,
dans lequel l'unité de commande (40) est conçue pour interrompre le fonctionnement du dispositif de traitement d'air (8) dans le premier état de fonctionnement (52, 54) .

6. Système de conditionnement d'air (2) selon l'une des revendications précédentes,
comportant également au moins un clapet de sortie (32) qui est relié à l'unité de commande (40) et qui est conçu pour évacuer l'air d'une cabine (4) de l'aéronef (64),
l'unité de commande (40) étant conçue pour fermer l'au moins un clapet de sortie (32) dans le premier état de fonctionnement (52, 54) et pour ouvrir ledit clapet dans le deuxième état de fonctionnement (53, 55) aux fins de réguler une pression dans une cabine (4) de l'aéronef (64), laquelle pression est fonction de la hauteur de vol.

7. Système de conditionnement d'air (2) selon la revendication 6,
dans lequel l'unité de commande (40) est conçue pour actionner l'au moins un clapet de sortie (32) avant l'adoption du premier état de fonctionnement (52, 54) de sorte que, immédiatement avant le premier état de fonctionnement (52, 54), la pression dans la cabine (4) corresponde sensiblement à une pression finale de la cabine (4) après un passage par le deuxième état de fonctionnement (53, 55) au lieu du premier état de fonctionnement (52, 54).

8. Système de conditionnement d'air (2) selon l'une des revendications précédentes,
dans lequel le premier état de vol comprend une phase d'approche à l'atterrissage, comprise entre un vol de croisière et un atterrissage, ou une phase ascensionnelle, comprise entre le décollage et l'atteinte de la hauteur de croisière.

9. Système de conditionnement d'air (2) selon la revendication 8,
dans lequel le premier état de vol comprend au plus un tiers inférieur de la phase d'approche à l'atterrissage ou de la phase ascensionnelle.

10. Système de conditionnement d'air (2) selon l'une des revendications précédentes,
comportant également un dispositif avertisseur (42) et un moyen de désactivation (44) qui est relié à l'unité de commande (40),
le dispositif d'avertissement (42) étant conçu pour indiquer l'adoption du premier état de fonctionnement (52, 54) dans un cockpit de l'aéronef (64), et
le moyen de désactivation (44) étant conçu pour envoyer un signal de commande à l'unité de commande (40) de sorte que l'unité de commande (40) annule le premier état de fonctionnement (52, 54).

11. Système de conditionnement d'air selon l'une des revendications précédentes,
comportant également un dispositif de détection optique destiné à détecter des paramètres propres au milieu ambiant, le dispositif de détection optique étant relié à l'unité de commande (40).

12. Aéronef (64) comportant un fuselage dans lequel est ménagée une cabine (4) et doté d'au moins un système de conditionnement d'air (2) selon l'une des revendications 1 à 11.

13. Aéronef (64) selon la revendication 12,
dans lequel l'unité de commande (40) est susceptible d'être raccordée à une unité de traitement (36) à bord de l'aéronef (64), ladite unité de traitement fournissant les paramètres propres au milieu ambiant et/ou propres au vol.

14. Aéronef (64) selon la revendication 13,
dans lequel l'unité de traitement (36) est conçue pour recevoir au moins un ensemble de données concernant des paramètres propres au milieu ambiant depuis un dispositif situé à l'extérieur de l'aéronef (64) et pour fournir ledit ensemble de données à une base de données dans l'aéronef (64) d'une manière extractible par l'unité de commande (40), et
dans lequel l'ensemble de données contient des données résolues verticalement sur des paramètres propres au milieu ambiant au moins pour un site de décollage ou d'atterrissage prévu.

15. Aéronef (64) selon l'une des revendications 12 à 14,
lequel aéronef (64) est un aéronef de transport de passagers.
